(19) Europäisches Patentamt
European Patent Office
Office européen des brevets

(11) Veröffentlichungsnummer: **0 035 116**
**A2**

(12) # EUROPÄISCHE PATENTANMELDUNG

(21) Anmeldenummer: **81100593.3**

(22) Anmeldetag: **28.01.81**

(51) Int. Cl.[3]: **C 09 B 29/36**
// D06P3/54, C09B29/085

(30) Priorität: **08.02.80 DE 3004655**

(43) Veröffentlichungstag der Anmeldung: **09.09.81**
**Patentblatt 81/36**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Eilingsfeld, Heinz, Dr., Pierstrasse 9 A,**
**D-6710 Frankenthal (DE)**
Erfinder: **Hansen, Guenter, Dr., ALwin-Mittasch-Platz 8,**
**D-6700 Ludwigshafen (DE)**
Erfinder: **Kermer, Wolf-Dieter, Dr., Im Schlittweg 4,**
**D-6701 Fussgoenheim (DE)**
Erfinder: **Seybold, Guenther, Dr.,**
**Friedrich-Ebert-Strasse 14, D-6701 Neuhofen (DE)**

(54) **Azofarbstoffe und Farbstoffmischungen und ihre Verwendung zum Färben von Polyestern.**

(57) Die Erfindung betrifft Azofarbstoffe der allgemeinen Formel

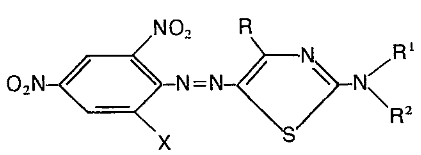

I ,

in der

X Wasserstoff, Chlor oder Brom,

R gegebenenfalls substituiertes Phenyl, Alkyl oder Aralkyl,

$R^1$ und $R^2$ unabhängig voneinander gegebenenfalls substituiertes Alkyl, Alkenyl, Alkinyl, Cycloalkyl, Aralkyl oder Aryl,

$R^1$ und $R^2$ zusammen mit dem Stickstoff einen gesättigten heterocyclischen 5- bis 7-Ring und einer der Reste $R^1$ und $R^2$ auch Wasserstoff

bedeuten sowie Mischungen dieser Farbstoffe mit Farbstoffen der allgemeinen Formel

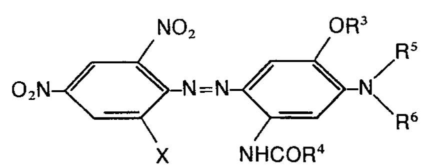

IV

in der

X Chlor, Brom oder Wasserstoff,

$R^3$ Methyl, Äthyl oder Phenyl,

$R^4$ Wasserstoff, Äthyl, Propyl oder vorzugsweise Methyl,

$R^5$ $C_1$- bis $C_6$-Alkyl, das durch Chlor, Brom, Hydroxy, Cyan, $C_1$- bis $C_8$-Alkoxy, Phenoxy, $C_1$- bis $C_4$-Alkanoylamino, $C_1$- bis $C_4$-Alkanoyloxy, $C_1$- bis $C_4$-Alkoxycarbonyloxy, Benzoyloxy, $C_1$- bis $C_4$-Alkoxycarbonyl oder Phenyl substituiert sein kann oder Allyl, Methallyl, Crotonyl, 3-Methyl-but-2-en-yl oder Propargyl bedeuten und

$R^6$ für Wasserstoff oder einen der für $R^5$ genannten Reste steht.

Die Farbstoffe und Farbstoffmischungen eignen sich sehr gut zum Färben von Polyestern.

EP 0 035 116 A2

Azofarbstoffe und Farbstoffmischungen und ihre Verwendung zum Färben von Polyestern

Die Erfindung betrifft Farbstoffe der allgemeinen Formel I

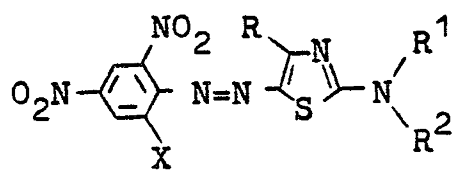

I,

in der

X Wasserstoff, Chlor oder Brom,

R gegebenenfalls substituiertes Phenyl, Alkyl oder Aralkyl,

$R^1$ und $R^2$ unabhängig voneinander gegebenenfalls substituiertes Alkyl, Alkenyl, Alkinyl, Cycloalkyl, Aralkyl oder Aryl,

$R^1$ und $R^2$ zusammen mit dem Stickstoff einen gesättigten heterocyclischen 5- bis 7-Ring und einer der Reste $R^1$ und $R^2$ auch Wasserstoff bedeuten.

Reste R sind beispielsweise durch $C_1$- bis $C_{10}$-Alkyl, $C_1$- bis $C_{10}$-Alkoxy, Phenoxy, Benzyloxy, Phenyl, Chlor, Brom, Fluor, Nitro, $C_1$- bis $C_4$-Alkoxycarbonyl, $C_1$- bis $C_4$-Mono- oder Dialkylamino, $C_1$- bis $C_4$-Alkoxy-äthoxy, $C_1$- bis $C_4$-Alkyl- oder Phenylmercapto, $C_1$- bis $C_5$-Alkanoylamino, wie Acetylamino, Propionylamino, Butyrylamino oder Valerylamino ein- oder mehrfach substituiertes Phenyl, $C_1$- bis $C_4$-Alkyl, $C_1$- bis $C_4$-Alkoxycarbonylmethyl, Cyanmethyl oder Benzyl.

Reste $R^1$ und $R^2$ sind z. B. $C_1$- bis $C_8$-Alkylreste, die noch durch Sauerstoff unterbrochen und durch Hydroxy,

Bg/BL

Cyan, Chlor, $C_1$- bis $C_4$-Alkoxy, $C_1$- bis $C_4$-Alkanoyloxy, $C_1$- bis $C_4$-Alkoxycarbonyl, $C_1$- bis $C_4$-Alkanoylamino, Acetyl, $C_1$- bis $C_4$-Alkylaminocarbonyloxy, Arylaminocarbonyloxy, $C_1$- bis $C_4$-Alkoxycarbonyloxy oder Phenoxycarbonyloxy substituiert sein können, Allyl, Methallyl, Crotonyl, 3-Methyl-but-2-en-yl, Propargyl, Cyclohexyl, Phenyl-$C_1$- bis $C_5$-alkyl, Phenoxyäthoxypropyl, Phenyl, Methoxyphenyl, Äthoxyphenyl oder Tolyl.

Einzelne Reste sind neben den bereits genannten beispielsweise:
Methyl, Äthyl, Propyl, Butyl, Pentyl, Hexyl, ß-Hydroxyäthyl, ß-Methoxyäthyl, γ-Methoxypropyl, ß-Cyanäthyl, ß-Carbomethoxyäthyl, ß-Carboäthoxyäthyl, ß-Acetoxyäthyl, ß-Äthoxycarbonyläthyl, γ-Acetylaminopropyl, Phenoxycarbonyloxyäthyl, Phenylaminocarbonyloxyäthyl, Butylaminocarbonyloxyäthyl, Benzyl, ß-Phenyläthyl.

$R^1$ und $R^2$ zusammen mit dem Stickstoff sind z. B. Pyrrolidino, Piperidino, Morpholino, Piperazino, α-Methylpiperazino, Hexamethylenimino oder Thiomorpholino-S-dioxid.

Zur Herstellung der Verbindungen der Formel I kann man eine Diazoniumverbindung von Aminen der Formel II

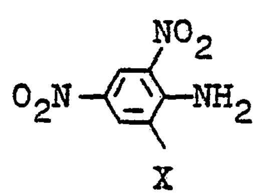 II

mit einer Kupplungskomponente der Formel III

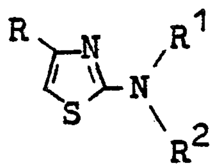

III

umsetzen. Diazotierung und Kupplung verlaufen unter üblichen Bedingungen. Einzelheiten können den Beispielen entnommen werden.

Die Farbstoffe der Formel I sind Dispersionsfarbstoffe, die vorzugsweise auf synthetischen Fasern, insbesondere Polyestern violette bis blaugrüne Färbungen mit guten Echtheiten ergeben.

Zu nennen sind die Licht-, Naß- und thermischen Echtheiten, sowie die hohe Farbstärke und das gute Aufbauvermögen. Einige der Farbstoffe sind auch für das in der deutschen Patentschrift 1 811 796 beschriebene Verfahren geeignet.

Von besonderer Bedeutung sind Farbstoffe der Formel I a

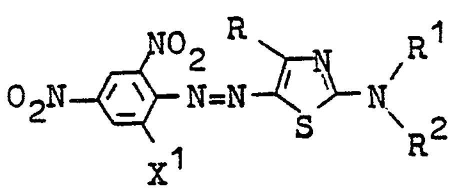

I a,

in der

$X^1$ Chlor oder Brom bedeutet und

R, $R^1$ und $R^2$ die angegebenen Bedeutungen haben. Mit

Farbstoffen der Formel I a kann man auf Polyesterfasern rotstichige bis grünstichige marineblaue Färbungen erzielen. Bemerkenswert ist dabei besonders die hohe Farbstärke. Die Farbstoffe der Formel I a eignen sich insbesondere als Mischungskomponenten für Grau-, Schwarz-, Braun-, Grün- und Dunkelblautöne. Von besonderem technischen Interesse sind Farbstoffe der Formel I b

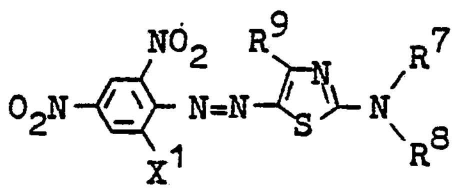

I b

in der

$R^7$ und $R^8$ unabhängig voneinander Methyl, Äthyl, Propyl, Butyl, Pentyl, Hexyl, Allyl, Methallyl, Crotonyl, 3-Methyl-but-2-en-yl, Methoxyäthyl, Äthoxyäthyl oder ß-Carbomethoxyäthyl und

$R^9$ gegebenenfalls durch Chlor, Brom, Nitro, $C_1$- bis $C_4$-Alkoxy, Phenoxy, $C_1$- bis $C_4$-Alkoxyäthoxy, $C_1$- bis $C_5$-Alkanoylamino, Methyl oder Äthyl substituiertes Phenyl bedeuten und

$X^1$ die angegebene Bedeutung hat.

Besonders bevorzugt sind Farbstoffe der Formel I b, in denen

$R^9$ in o- oder p-Stellung durch $C_1$- bis $C_4$-Alkoxy oder $C_1$- bis $C_5$-Alkanoylamino substituiertes Phenyl ist.

Bei der Herstellung der Farbstoffe der Formel I b können auch synthetisch bedingte Isomerengemische auftreten, die jedoch die färberischen Eigenschaften nicht ungünstig beeinflussen.

Die Erfindung betrifft weiterhin Mischungen von Farbstoffen der Formel I mit Farbstoffen der Formel IV,

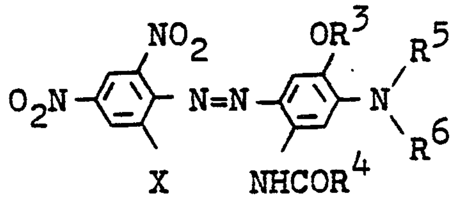 IV

in der

X Chlor, Brom oder Wasserstoff,

$R^3$ Methyl, Äthyl oder Phenyl,

$R^4$ Wasserstoff, Äthyl, Propyl oder vorzugsweise Methyl,

$R^5$ $C_1$- bis $C_6$-Alkyl, das durch Chlor, Brom, Hydroxy, Cyan, $C_1$- bis $C_8$-Alkoxy, Phenoxy, $C_1$- bis $C_4$-Alkanoylamino, $C_1$- bis $C_4$-Alkanoyloxy, $C_1$- bis $C_4$-Alkoxycarbonyloxy, Benzoyloxy, $C_1$- bis $C_4$-Alkoxycarbonyl oder Phenyl substituiert sein kann oder Allyl, Methallyl, Crotonyl, 3-Methyl-but-2-en-yl oder Propargyl bedeuten und

$R^6$ für Wasserstoff oder einen der für $R^5$ genannten Reste steht.

Reste $R^5$ bzw. $R^6$ sind neben den bereits genannten im einzelnen z. B.: Methyl, Äthyl, Propyl, Butyl, Pentyl, Hexyl, Chloräthyl, Bromäthyl, Cyanäthyl, Benzyl, Phenyläthyl, 3-Phenylpropyl, 2-Phenylpropyl, Hydroxyäthyl, 2-Phenyl-2-hydroxyäthyl, 2-Hydroxy-3-chlorpropyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxy-propyl, 3-Hydroxypropyl, 2-Methoxyäthyl, 2-Äthoxyäthyl, 2-Propoxyäthyl, 2-Butoxyäthyl, 2-Phenoxy-

äthyl, 2-Phenoxypropyl, 2-Acetylaminoäthyl, 3-Acetylaminopropyl, 2-Propionylaminoäthyl, 2-Benzoyloxyäthyl, 2-Acetoxyäthyl, 2-Propionyloxyäthyl, 2-Butyryloxyäthyl, 2-Isobutyryloxyäthyl, 2-Methoxycarbonyloxyäthyl, 2-Äthoxycarbonyloxyäthyl, 2-Butoxycarbonyloxyäthyl, Benzoyloxyäthyl, Methoxycarbonyläthyl, Äthoxycarbonyläthyl, Propoxycarbonyläthyl, Butoxycarbonyläthyl, Methoxyäthoxycarbonyläthyl, Isopropoxycarbonyläthyl oder Isobutyryloxycarbonyläthyl.

Die Gemische der Farbstoffe der Formeln I und IV erhält man entweder durch mechanisches Mischen der Einzelfarbstoffe oder aus Diazoniumverbindungen von Aminen der Formel II und einem Kupplungskomponenten-Gemisch aus Verbindungen der Formel III und der Formel V

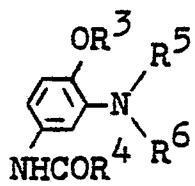

V,

in der
$R^3$ bis $R^6$ die angegebenen Bedeutungen haben.

Einzelheiten können den Beispielen entnommen werden, in denen sich Angaben über Teile und Prozente, sofern nicht anders vermerkt, auf das Gewicht beziehen.

Mischungen der Farbstoffe I und IV zeigen in der Regel im Vergleich zu den Einzelkomponenten verbesserte Farbstärken, besseres Aufbauvermögen, bessere Baderschöpfung und besseres färberisches Verhalten, z. B. eine geringere

Abhängigkeit der Farbtiefe von der Färbetemperatur.

Insbesondere diese letzte Eigenschaft ist für den Färbeprozeß sehr bedeutsam.

Anstelle der Farbstoffe der Formel I kann man auch die entsprechenden, in der deutschen Patentanmeldung P 2 910 806.3 beschriebenen Farbstoffe als Mischungskomponenten verwenden.

Besonders wertvoll als Mischungskomponenten sind Farbstoffe der Formel IV a

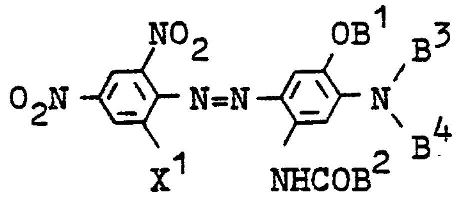 IV a,

in der

$X^1$ Chlor oder Brom,

$B^1$ Methyl oder Äthyl,

$B^2$ Methyl oder Äthyl,

$B^3$ gegebenenfalls durch Phenyl, Phenoxy, Hydroxy, Cyan, $C_1$- bis $C_8$-Alkoxy oder $C_1$- bis $C_4$-Alkanoyloxy substituiertes $C_1$- bis $C_5$-Alkyl oder Allyl, Methallyl, Crotonyl oder 3-Methyl-but-2-en-yl und

$B^4$ Wasserstoff oder einen Rest $B^3$ bedeuten.

Besonders bevorzugt sind Farbstoffe der Formel IVa, bei denen $B^3$ ß-Cyanäthyl und $B^4$ $C_1$- bis $C_5$-Alkyl, Allyl, Methallyl, Crotonyl, 3-Methyl-but-2-en-yl oder Benzyl sind.

Die erfindungegemäßen Mischungen enthalten zweckmäßigerweise mindestens 50 % eines oder mehrerer Farbstoffe der Formel IV und 10 bis 50 % eines oder mehrerer Farbstoffe der Formel I.

Beispiel 1

a) 262 Teile 6-Brom-2,4-Dinitroanilin werden in 2000 Teile konzentrierte Schwefelsäure eingetragen. Unter Rühren und Kühlung läßt man bei 5 bis 15 °C 320 Teile Nitrosylschwefelsäure (11,5 % $N_2O_3$) langsam zulaufen und rührt mindestens 3 Stunden bei 10 °C bis 15 °C nach.

b) 276 Teile 2-Diäthylamino-4-(4'-äthoxy-phenyl)-thiazol werden in ein Gemisch von 2000 Teilen Wasser, 300 Volumenteilen konzentrierter Salzsäure, 10 Teilen Amidosulfonsäure und 10 Teilen eines Diisobutylnaphthalin-1-sulfonsäure-Gemisches gegeben. Man fügt 4000 Teile Eis hinzu und läßt unter gutem Rühren die unter a) bereitete Diazoniumsalzlösung bei -5 bis +3 °C langsam zulaufen. Durch Zugabe von Natriumacetat oder -formiat bis zu einem pH-Wert von 3 wird die Umsetzung vervollständigt. Der erhaltene Farbstoff wird bei Raumtemperatur oder erhöhter Temperatur abgesaugt, mit Wasser neutral und salzfrei gewaschen und getrocknet. Man erhält etwa 500 Teile eines blauschwarzen Pulvers der Formel

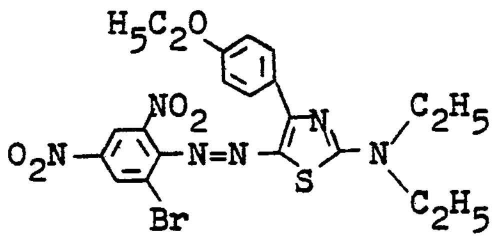

mit dem man auf Polyesterfasern sehr farbstarke, grünstichig-blaue Färbungen mit guter Schweiß-, Wasch- und Thermofixierechtheit erhält.

Analog Beispiel 1 erhält man auch die in der folgenden Tabelle durch ihre Substituenten gekennzeichneten Farbstoffe der Formel I, die ähnliche coloristische Eigenschaften haben.

| Bsp. | X | $R^1$ | $R^2$ | R | Farbton auf Polyester |
|---|---|---|---|---|---|
| 2 | H | $C_2H_5$ | $C_2H_5$ | $C_6H_5$ | blauviolett |
| 3 | Cl | Allyl | Allyl | $C_6H_5$ | " |
| 4 | Br | " | " | " | " |
| 5 | H | " | " | " | violett |
| 6 | Cl | $C_2H_5$ | $C_2H_5$ | " | blau |
| 7 | Br | " | " | " | " |
| 8 | H | Allyl | Allyl | 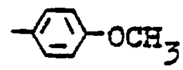 | blauviolett |
| 9 | Cl | " | " | " | blau |
| 10 | Br | " | " | " | " |
| 11 | H | $C_2H_5$ | $C_2H_5$ | " | " |
| 12 | Cl | " | " | " | grünstichig blau |
| 13 | Br | " | " | " | " |
| 14 | Cl | " | " | 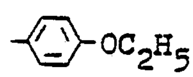 | " |
| 15 | Cl | Allyl | Allyl | " | blau |
| 16 | Br | " | " | " | " |
| 17 | Cl | " | " | 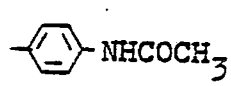 | blaugrün |

| Bsp. | X | $R^1$ | $R^2$ | R | Farbton auf Polyester |
|---|---|---|---|---|---|
| 18 | Br | Allyl | Allyl | 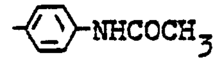 | blaugrün |
| 19 | Cl | $C_2H_5$ | $C_2H_5$ | " | " |
| 20 | Br | " | " | " | " |
| 21 | Cl | " | " | 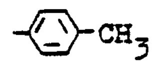 | blau |
| 22 | Cl | " | " | 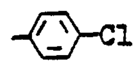 | " |
| 23 | Cl | " | " | 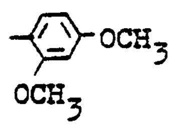 | grünstichig blau |
| 24 | Cl | " | " | $CH_3$ | blauviolett |
| 25 | Br | Allyl | $-C_2H_4CO_2CH_3$ | $C_6H_5$ | " |
| 26 | Br | $C_2H_5$ | $-C_2H_4CO_2CH_3$ | " | blau |
| 27 | Br | H | $-(CH_2)_3-OCH_3$ | " | violett |
| 28 | Br | $-C_2H_4OH$ | $-C_2H_4CN$ | " | blauviolett |
| 29 | Br | $C_2H_5$ | $C_2H_4Cl$ | 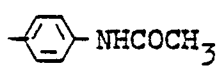 | blaugrün |
| 30 | Cl | H | $C_6H_5$ | 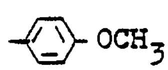 | blau |
| 31 | Cl | $-C_2H_4CN$ | $-C_2H_4OC(=O)-CH_3$ | 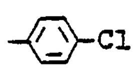 | blauviolett |

| Bsp. | X | $R^1$ | $R^2$ | R | Farbton auf Polyester |
|---|---|---|---|---|---|
| 32 | Br | $-C_2H_4C_6H_5$ | $-C_2H_4CO_2CH_3$ | $C_6H_5$ | blau |
| 33 | Br | $-C_2H_4OC(=O)NHCH_3$ | $-C_2H_4OC(=O)NHCH_3$ | 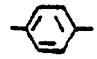 $-OCH_3$ | " |
| 34 | Cl | $-C_2H_4CN$ | $-C_2H_4OC(=O)-NHC_6H_5$ | $C_6H_5$ | blauviolett |
| 35 | Br | $-C_2H_4CN$ | $-C_2H_4OCH_3$ | $C_6H_5$ | " |
| 36 | Cl | $C_2H_5$ | $C_2H_5$ | 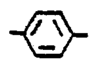 $OC_3H_7$ | grünstichig blau |
| 37 | Br | " | " | " | " |
| 38 | Cl | $C_2H_5$ | " | 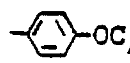 $-OC_4H_9$ | " |
| 39 | Br | " | " | " | " |
| 40 | Cl | Allyl | Allyl | " | blau |
| 41 | Br | " | " | " | " |
| 42 | Cl | $C_2H_5$ | $C_2H_5$ | 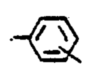 $OCH_3$ (o,p-Isomeren-Gemisch) | grünstichig blau |
| 43 | Br | " | " | " | " |

| Bsp. | X | $R^1$ | $R^2$ | R | Farbton auf Polyester |
|---|---|---|---|---|---|
| 44 | Cl | Allyl | Allyl | 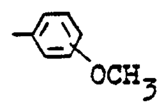 (o,p-Isomeren-Gemisch) | blau |
| 45 | Br | " | " | " | " |
| 46 | Cl | $-C_2H_4OH$ | $-CH_2-C_6H_5$ | $C_6H_5$ | " |
| 47 | Br | $-C_2H_4O\underset{\underset{O}{\Vert}}{C}CH_3$ | $-CH_2-C_6H_5$ | " | rotstichig blau |
| 48 | Br | " | Cyclohexyl | " | " |
| 49 | Br | $-C_2H_4O\underset{\underset{O}{\Vert}}{C}NHC_4H_9$ | $-C_2H_4C_6H_5$ | " | " |
| 50 | Cl | $C_2H_5$ | " | " | blau |
| 51 | Cl | Allyl | Cyclohexyl | " | blauviolett |
| 52 | Br | " | Allyl | 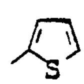 | grünstichig blau |
| 53 | Cl | " | " | " | " |
| 54 | Cl | $C_2H_5$ | $C_2H_5$ | " | blaugrün |
| 55 | Br | " | " | " | " |

| Bsp. | X | $R^1$ | $R^2$ | R | Farbton auf Polyester |
|---|---|---|---|---|---|
| 56 | Cl | $C_2H_5$ | $C_2H_5$ | 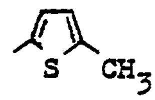 | blaugrün |
| 57 | Br | Allyl | Allyl | " | grünstichig blau |
| 58 | Cl | $C_2H_5$ | $C_2H_5$ | 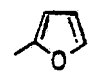 | blaugrün |
| 59 | Br | $C_2H_5$ | $C_2H_5$ | " | " |
| 60 | Cl | Allyl | Allyl | " | grünstichig blau |

Beispiel 61

a) Aus 273 Teilen 2-(N-Allyl-N-ß-cyanäthyl-amino)-4-acetanisidin erhält man analog Beispiel 1 b) 495 Teile des Farbstoffs der Formel

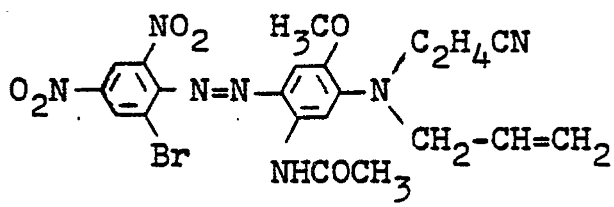

Mit diesem Farbstoff erhält man auf Polyesterfasern blaue Färbungen mit guter Licht-, Thermofixier-, Schweiß- und Waschechtheit. Der Farbstoff zeigt jedoch ein schlechtes Aufbauvermögen und eine starke Abhängigkeit der Farbtiefe von der Temperatur im Färbebad im Bereich von 120 bis 140 °C.

b) Polyestergewebe wird nach dem HT-Verfahren mit einer Farbstoffmischung gefärbt, die aus 25 Teilen des unter 1 b) hergestellten Farbstoffs und 75 Teilen des unter 61 a) hergestellten Farbstoffs besteht. Dabei wird das Farbstoffgemisch zweckmäßigerweise als Dispergiermittel enthaltende, feindisperse Zubereitung eingesetzt. Man erhält farbstarke, egale, grünstichige Marineblau-Färbungen mit gutem Echtheitsniveau. Im HT-Bereich von 125 bis 135 °C ist die Farbtiefe nur wenig von der Temperatur abhängig. Die Farbstoffmischung zeigt auch bei tiefen Marineblau-Färbungen noch ein gutes Badausziehvermögen und einen guten Farbaufbau.

Beispiel 62

262 Teile 6-Brom-2,4-dinitro-anilin werden wie unter 1 a) diazotiert und analog 1 b) auf eine Mischung von 205 Teilen 2-(N-Allyl-N-ß-cyanäthyl-amino)-4-acetanisidin und 68,7 Teilen 2-Diäthylamino-4-(4'-äthoxy-phenyl)-thiazol gekuppelt.
Man erhält einen Mischfarbstoff, der der in Beispiel 61 b) hergestellten mechanischen Mischung in der chemischen Zusammensetzung entspricht.
Der Mischfarbstoff wird nach bekannten Methoden in eine Farbstoffzubereitung überführt und zum Färben von Polyestern verwendet. Dabei werden die gleichen coloristischen Ergebnisse wie bei Beispiel 61 b) erzielt.

Beispiel 63

Polyestergewebe wird mit einer Mischung aus 70 Teilen des Farbstoffs aus Beispiel 61 a), 10 Teilen des Farbstoffs der Formel

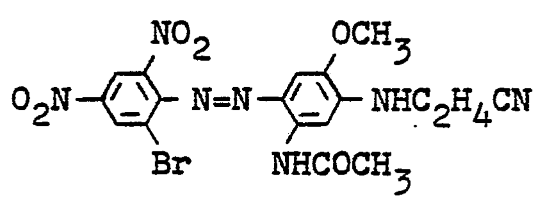

und 20 Teilen des Farbstoffs der Formel

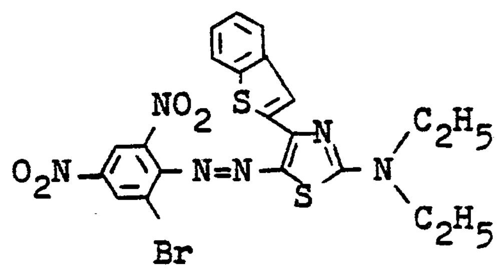

(Beispiel 40 aus der deutschen Patentanmeldung P. 2 910 806.3) gefärbt. Man erhält farbstarke, egale Marineblau-Färbungen mit guten Echtheiten. Die Mischung zeigt ein gutes Aufbauverhalten bis zu tiefen Marineblau-Tönen.

Farbton und Farbtiefe werden beim HT-Verfahren durch Temperatur- oder pH-Wert-Schwankungen im Färbebad nur wenig beeinflußt.

## Beispiel 64

217,5 Teile 6-Chlor-2,4-dinitro-anilin werden analog Beispiel 1 a) diazotiert und analog Beispiel 1 b) auf eine Mischung von 204,8 Teilen 2-(N-Allyl-N-ß-cyanäthylamino)-4-acetanisidin und 65,5 Teilen 2-Diäthylamino-4-(4'-methoxy-phenyl)-thiazol gekuppelt. Man erhält 465 Teile eines dunkel gefärbten Farbstoffpulvers, das Polyesterfasern marineblau färbt. Die Färbungen haben gute Licht-, Schweiß-, Wasch- und Thermofixierechtheiten. Die Farbstoff-Mischung zeigt ein gutes färberisches Verhalten, insbesondere ein gutes Aufbauvermögen sowie ein im Bereich von 125 bis 135 °C wenig temperaturabhängiges Ziehvermögen.

Beispiel 65

217,5 Teile 6-Chlor-2,4-dinitro-anilin werden analog Beispiel 1 a) diazotiert und analog Beispiel 1 b) auf eine Mischung von 240,2 Teilen 2-(N-Allyl-N-ß-cyanäthyl-amino)-4-acetanisidin und 39,1 Teilen 2-Diäthylamino-4-(4'-acetylamino-phenyl)-thiazol-hydrochlorid gekuppelt. Man erhält etwa 480 Teile eines Mischfarbstoffes, der Polyesterfasern grünstichig marineblau färbt und ähnliche coloristische Eigenschaften wie der in Beispiel 64 beschriebene Mischfarbstoff hat.

Die in der folgenden Tabelle aufgeführten Farbstoff-Gemische werden analog Beispiel 61 bis 65 erhalten und zeigen ähnliche coloristische Eigenschaften.

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 66 | 20 | I | Cl | $C_2H_5$ | $C_2H_5$ | 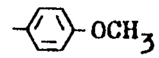 | - | 61 |
| | 10 | I | Cl | " | " | 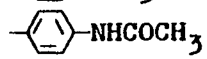 | - | |
| | 65 | IV | Br | $CH_3$ | $CH_3$ | $C_2H_4CN$ | Allyl | |
| | 5 | IV | Br | " | " | $C_2H_4CN$ | H | |
| 67 | 15 | I | Br | $C_2H_5$ | $C_2H_5$ | 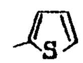 | - | 62 |
| | 15 | I | Br | " | " | 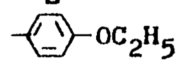 | - | |
| | 60 | IV | Br | $CH_3$ | $CH_3$ | $C_2H_4CN$ | $C_2H_5$ | |
| | 10 | IV | Br | " | " | " | H | |
| 68 | 30 | I | Cl | $C_2H_5$ | $C_2H_5$ | 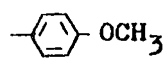 | - | 62 |
| | 30 | IV | Cl | $CH_3$ | $CH_3$ | $C_2H_4CN$ | Benzyl | |
| | 10 | IV | Cl | " | " | " | H | |
| | 30 | IV | Cl | " | " | " | Allyl | |

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 69 | 30 | I | Cl | $C_2H_5$ | $C_2H_5$ | 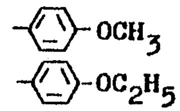 | - | 61 oder 62 |
| | 30 | I | Cl | $C_2H_5$ | $C_2H_5$ | | - | |
| | 40 | IV | Cl | $CH_3$ | $CH_3$ | $C_2H_4CN$ | $CH_3$ | |
| 70 | 10 | I | Br | $C_2H_5$ | $C_2H_5$ | $C_6H_5$ | - | 61 |
| | 30 | I | Cl | $C_2H_5$ | $C_2H_5$ | 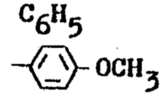 | - | |
| | 55 | IV | Br | $CH_3$ | $CH_3$ | $C_2H_4CN$ | Methallyl | |
| | 5 | IV | Br | $CH_3$ | $CH_3$ | $C_2H_4CN$ | H | |
| 71 | 80 | I | Br | $C_2H_5$ | $C_2H_5$ | 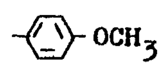 | - | 61 oder 62 |
| | 20 | IV | Br | $CH_3$ | $CH_3$ | $C_2H_4CN$ | Allyl | |

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 72 | 20 | I | Br | $C_2H_5$ | $C_2H_5$ | 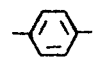 $-OC_2H_5$ | - | 62 |
| | 60 | IV | Br | $CH_3$ | $CH_3$ | $C_2H_4CN$ | $C_2H_4OH$ | |
| | 20 | IV | Br | $CH_3$ | $CH_3$ | $C_2H_4CN$ | H | |
| 73 | 25 | I | Cl | $C_2H_5$ | $C_2H_5$ | 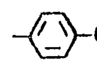 $-OCH_3$ | - | 61 oder 62 |
| | 75 | IV | Cl | $CH_3$ | $CH_3$ | $C_2H_4CN$ | $C_2H_4O\underset{\overset{\|}{O}}{C}CH_3$ | |
| 74 | 25 | I | Cl | $C_2H_5$ | $C_2H_5$ | 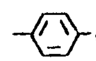 $-OCH_3$ | - | 62 |
| | 75 | IV | Br | $C_2H_5$ | $CH_3$ | $C_2H_4O-\underset{\overset{\|}{O}}{C}-CH_3$ | $C_2H_4O\underset{\overset{\|}{O}}{C}CH_3$ | |

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 75 | 10 | I | Cl | $C_2H_5$ | $C_2H_5$ | 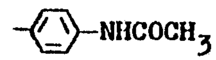 | - | 61 oder 62 |
| | 70 | IV | Cl | $C_2H_5$ | $CH_3$ | $C_2H_4CN$ | $C_2H_4OH$ | |
| | 20 | IV | Cl | $C_2H_5$ | $CH_3$ | $C_2H_4CN$ | H | |
| 76 | 30 | I | Cl | $C_2H_5$ | $C_2H_5$ | 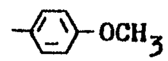 | - | 61 oder 62 |
| | 70 | IV | Cl | $CH_3$ | $CH_3$ | $CH_2CH(OH)CH_2OC_4H_9$ | H | |
| 77 | 20 | I | Cl | $C_2H_5$ | $C_2H_5$ | 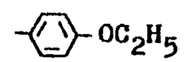 | - | 61 oder 62 |
| | 80 | IV | Cl | $CH_3$ | $CH_3$ | $CH_2CH(OC(=O)CH_3)CH_2OCH_3$ | H | |

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 78 | 20 | I | Br | Allyl | Allyl | 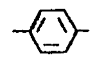 $-OCH_3$ | - | 62 |
| | 10 | IV | Br | $CH_3$ | $CH_3$ | Allyl | Allyl | |
| | 70 | IV | Br | $CH_3$ | $CH_3$ | $C_2H_4CN$ | Allyl | |
| 79 | 15 | I | Br | $C_2H_5$ | $C_2H_5$ | 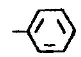 | - | 62 |
| | 85 | IV | Br | $CH_3$ | $CH_3$ | $C_2H_5$ | $C_2H_5$ | |
| 80 | 25 | I | Cl | Allyl | Allyl | 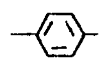 $-OC_2H_5$ | - | 61 |
| | 75 | IV | Br | $CH_3$ | $C_2H_5$ | $C_2H_4CN$ | $C_2H_5$ | |
| 81 | 20 | I | Br | $C_2H_5$ | $C_2H_5$ | 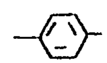 $-OC_3H_7$ | - | 61 |
| | 80 | IV | Br | $CH_3$ | H | $C_2H_4CN$ | 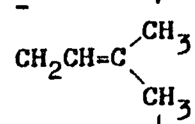 | |

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 82 | 20 | I | Cl | $C_2H_4OCNHCH_3$ (C=O) | $C_2H_4OCNHCH_3$ (C=O) | 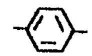 $-OCH_3$ | - | 61 |
| | 80 | IV | Cl | $CH_3$ | $CH_3$ | $C_2H_4CN$ | $CH_2C_6H_5$ | |
| 83 | 20 | I | Br | $C_2H_4CO_2CH_3$ | Allyl | 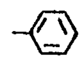 | - | 62 |
| | 80 | IV | Br | $CH_3$ | $CH_3$ | $C_2H_4CN$ | Allyl | |
| 84 | 15 | I | Br | $(CH_2)_3OCH_3$ | H | 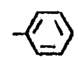 | - | 62 |
| | 15 | IV | Br | $CH_3$ | $CH_3$ | $C_2H_4CN$ | H | |
| | 70 | IV | Br | $CH_3$ | $CH_3$ | $C_2H_4CN$ | $C_4H_9$ | |
| 85 | 22 | I | Cl | Allyl | Allyl | 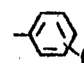 $OCH_3$ o,p-Isomeren-Gemisch | - | 62 |
| | 78 | IV | Cl | $CH_3$ | $CH_3$ | $C_2H_4CN$ | Allyl | |

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 86 | 20<br>80 | I<br>IV | Br<br>Br | $-C_2H_4O\underset{\overset{\|}{O}}{C}CH_3$<br>$CH_3$ | $-CH_2-C_6H_5$<br>$CH_3$ | 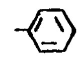<br>$C_2H_4CN$ | -<br>$CH_2-C_6H_5$ | 62 |
| 87 | 20<br>80 | I<br>IV | Cl<br>Br | Allyl<br>$CH_3$ | Cyclohexyl<br>$CH_3$ | 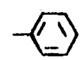<br>$C_2H_4CN$ | -<br>Allyl | 61 |
| 88 | 25<br>75 | I<br>IV | Cl<br>Cl | $C_2H_5$<br>$CH_3$ | $C_2H_5$<br>$CH_3$ | 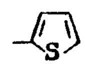<br>$C_2H_4CN$ | -<br>Allyl | 61 oder 62 |
| 89 | 20<br>80 | I<br>IV | Br<br>Br | Allyl<br>$CH_3$ | Allyl<br>$CH_3$ | 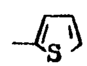<br>$C_2H_4CN$ | -<br>Allyl | 61 oder 62 |

| Bsp. | % | Farbstoff d. Formel | X | $R^1$ bzw. $R^3$ | $R^2$ bzw. $R^4$ | R bzw. $R^5$ | $R^6$ | Herstellung analog Beispiel |
|---|---|---|---|---|---|---|---|---|
| 90 | 15 | I | Br | $C_2H_5$ | $C_2H_5$ | 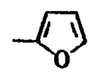 | - | 61 |
| | 80 | IV | Cl | $CH_3$ | $CH_3$ | $C_2H_4CN$ | Allyl | |
| | 5 | IV | Cl | $CH_3$ | $CH_3$ | $C_2H_4CN$ | H | |
| 91 | 25 | I | H | $C_2H_5$ | $C_2H_5$ | 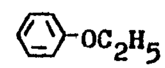 | - | 61 |
| | 75 | IV | Br | $CH_3$ | $CH_3$ | $C_2H_4CN$ | Allyl | |
| 92 | 25 | I | H | $C_2H_5$ | $CH_3$ | 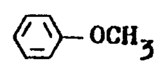 | - | 62 |
| | 75 | IV | H | $C_2H_5$ | $CH_3$ | $C_2H_5$ | $C_2H_5$ | |
| 93 | 20 | I | H | $C_2H_5$ | $C_2H_5$ | 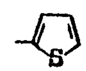 | - | 61 |
| | 60 | IV | Br | $CH_3$ | $CH_3$ | $C_2H_4CN$ | $C_2H_5$ | |
| | 20 | IV | Br | $CH_3$ | $CH_3$ | $C_2H_4CN$ | H | |

Patentansprüche

1. Azofarbstoffe der allgemeinen Formel

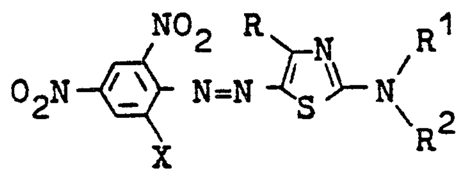 I,

in der

X Wasserstoff, Chlor oder Brom,

R gegebenenfalls substituiertes Phenyl, Alkyl oder Aralkyl,

$R^1$ und $R^2$ unabhängig voneinander gegebenenfalls substituiertes Alkyl, Alkenyl, Alkinyl, Cycloalkyl, Aralkyl oder Aryl,

$R^1$ und $R^2$ zusammen mit dem Stickstoff einen gesättigten heterocyclischen 5- bis 7-Ring und einer der Reste $R^1$ und $R^2$ auch Wasserstoff bedeuten.

2. Farbstoffe gemäß Anspruch 1 der Formel

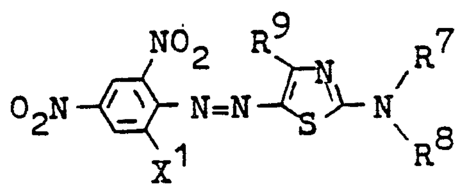 I b

in der

$R^7$ und $R^8$ unabhängig voneinander Methyl, Äthyl, Propyl, Butyl, Pentyl, Hexyl, Allyl, Methallyl, Crotonyl, 3-Methyl-but-2-en-yl, Methoxyäthyl, Äthoxyäthyl oder ß-Carbomethoxyäthyl und

$R^9$ gegebenenfalls durch Chlor, Brom, Nitro, $C_1$- bis $C_4$-Alkoxy, Phenoxy, $C_1$- bis $C_4$-Alkoxyäthoxy, $C_1$- bis $C_5$-Alkanoylamino, Methyl oder Äthyl substituiertes Phenyl bedeuten

und

$X^1$ Chlor oder Brom ist.

3. Mischungen von Farbstoffen gemäß Anspruch 1 mit Farbstoffen der allgemeinen Formel

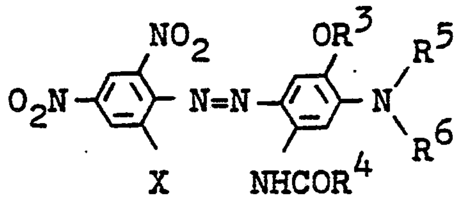

IV

in der

X Chlor, Brom oder Wasserstoff,

$R^3$ Methyl, Äthyl oder Phenyl,

$R^4$ Wasserstoff, Äthyl, Propyl oder vorzugsweise Methyl,

$R^5$ $C_1$- bis $C_6$-Alkyl, das durch Chlor, Brom, Hydroxy, Cyan, $C_1$- bis $C_8$-Alkoxy, Phenoxy, $C_1$- bis $C_4$-Alkanoylamino, $C_1$- bis $C_4$-Alkanoyloxy, $C_1$- bis $C_4$-Alkoxycarbonyloxy, Benzoyloxy, $C_1$- bis $C_4$-Alkoxycarbonyl oder Phenyl substituiert sein kann oder Allyl, Methallyl, Crotonyl, 3-Methyl-but-2-en-yl oder Propargyl bedeuten und

$R^6$ für Wasserstoff oder einen der für $R^5$ genannten Reste steht.

4. Verwendung der Farbstoffe und Farbstoffmischungen gemäß den Ansprüchen 1 bis 3 zum Färben synthetischer Polyester.